(19) Europäisches Patentamt
European Patent Office
Office européen des brevets

(11) **EP 2 629 629 B1**

(12) **EUROPEAN PATENT SPECIFICATION**

(45) Date of publication and mention
of the grant of the patent:
**13.05.2015 Bulletin 2015/20**

(21) Application number: **11772923.6**

(22) Date of filing: **12.10.2011**

(51) Int Cl.:
*A23L 1/00* (2006.01)          *A23G 9/38* (2006.01)
*A23G 9/46* (2006.01)

(86) International application number:
**PCT/EP2011/067825**

(87) International publication number:
**WO 2012/052335 (26.04.2012 Gazette 2012/17)**

(54) **FOAMING AGENTS COMPRISING HYDROPHOBIN**

SCHAUMBILDNER MIT HYDROPHOBIN

AGENTS MOUSSANTS COMPORTANT DE L'HYDROPHOBINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2010 EP 10188160**

(43) Date of publication of application:
**28.08.2013 Bulletin 2013/35**

(73) Proprietors:
• **Unilever PLC**
**London EC4Y 0DN (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventor: **COX, Andrew, Richard**
**Sharnbrook Bedfordshire MK44 1LQ (GB)**

(74) Representative: **van Benthum, Wilhelmus A. J.**
**Unilever N.V.**
**Unilever Patent Group**
**Olivier van Noortlaan 120**
**3133 AT Vlaardingen (NL)**

(56) References cited:
**EP-A1- 1 623 631      WO-A1-01/57076**

• **LINDER ET AL: "Hydrophobins: the protein-amphiphiles of filamentous fungi", FEMS MICROBIOLOGY REVIEWS, ELSEVIER, AMSTERDAM, NL, vol. 29, no. 5, 1 November 2005 (2005-11-01), pages 877-896, XP005107912, ISSN: 0168-6445, DOI: 10.1016/J.FEMSRE.2005.01.004**
• **ASKOLIN ET AL: "Overproduction, purification, and characterization of the Trichoderma reesei hydrophobin HFBI.", APPLIED MICROBIOLOGY AND BIOTECHNOLOGY, vol. 57, no. 1-2, 1 October 2001 (2001-10-01), pages 124-130, XP055005995, ISSN: 0175-7598**
• **TCHUENBOU-MAGAIA F L ET AL: "Hydrophobins stabilised air-filled emulsions for the food industry", FOOD HYDROCOLLOIDS, ELSEVIER BV, NL, vol. 23, no. 7, 1 October 2009 (2009-10-01), pages 1877-1885, XP026145883, ISSN: 0268-005X, DOI: 10.1016/J.FOODHYD. 2009.03.005 [retrieved on 2009-03-24]**

EP 2 629 629 B1

**Description**

Technical Field of the Invention

The present invention particularly relates to food compositions containing a hydrophobin and polysaccharides and / or proteins.

Background to the Invention

Hydrophobins can be obtained by culturing filamentous fungi, such as hyphomycetes (e.g. Trichoderma), basidiomycetes and ascomycetes, which secrete the hydrophobin into the growth medium. Alternatively, hydrophobins can be obtained by the use of recombinant technology. For example host cells, typically micro-organisms, may be modified to express hydrophobins. Typically, the growth medium which contains the hydrophobin also contains other products of fermentation process.

EP 1626361 discloses that hydrophobins are very effective at creating and stabilizing foams, for example in aerated food products such as ice cream. Many food products contain polysaccharides (such as locust bean gum, guar gum, and carboxymethyl cellulose) as stabilisers or thickeners. Food products also frequently contain proteins, such as milk proteins.

Brief Description of the Invention

We have now recognised and solved a previously unknown problem associated with using hydrophobins in food products which contain polysaccharides and / or proteins. We have found that hydrophobin preparations typically contain, in addition to the hydrophobin, various by-products of the production process which include enzymes such as mannanase, cellulase and protease. If these enzymes are present above a certain level they can denature their corresponding protein / polysaccharide, while not interfering with the properties of hydrophobins in the final food product. This results in a loss of the functionality of the protein / polysaccharide, which in turn has a negative effect on the quality of the food product. For example, if the food product contains a polysaccharide as a viscosifier, denaturing the polysaccharide prevents it from imparting the required viscosity to the food product.

Accordingly, in a first aspect, the present invention relates to a hydrophobin composition having an enzymatic activity selected from the group consisting of:

. a detectable mannanase activity of less than 0.015 MMU, preferably less than 0.01 MMU,
. a detectable endogluconase activity of less than 0.1 EGU, preferably less than 0.05 EGU ,
. a detectable cysteine protease activity of less than 1.3 PU, preferably less than 1, more preferably less than 0.5 PU

or any combination thereof

This allows for a hydrophobin composition containing a residual enzyme content non detrimental to the characteristics of the final food product without requiring purification methods.

Preferably, the mannanase activity is at least 0.001 MMU, more preferably at least 0,005MMU.

Preferably the endogluconase activity is at least 0.001 EGU, more preferably at least 0.005 EGU, most preferably at least 0.01 EGU.

Preferably, the cysteine protease activity is at least 0.01 PU, more preferably at least 0.05 PU, more preferably at least 0.1 PU.

This allows for compositions having a small enzymatic activity if required while not having a detrimental effect of the final product characteristics.

Preferably the hydrophobin is a class II hydrophobin, more preferably the hydrophobin is HFB II.

It is a second aspect of the invention to provide a food composition comprising least 0.001 wt%, hydrophobin (based on the total weight of the product), preferably at least 0.005 wt%, more preferably at least 0.01 and having an enzymatic activity selected from the group consisting of

. a mannanase activity of less than 0.015 MMU, preferably less than 0.01 MMU,
. a endogluconase activity of less than 0.1 EGU, preferably less than 0.05 EGU ,
. a cysteine protease activity of less than 1.3 PU, preferably less than 1, more preferably less than 0.5 PU

or any combination thereof

Preferably, the mannanase activity is at least 0.001 MMU, more preferably at least 0,005MMU.

Preferably the endogluconase activity is at least 0.001 EGU, more preferably at least 0.005 EGU, most preferably at least 0.01 EGU.

Preferably, the cysteine protease activity is at least 0.01 PU, more preferably at least 0.05 PU, more preferably at least 0.1 PU.

Preferably the hydrophobin is a class II hydrophobin, more preferably the hydrophobin is HFB II.

Preferably the food composition contains a protein and / or polysaccharide selected from milk protein, soy protein, cellulose, cellulose derivatives, microcrystalline cellulose, carboxymethyl cellulose, citrus fibre, starch, starch derivatives, locust bean gum, guar gum, fenugreek gum and tara gum.

Preferably the food composition is a frozen aerated confection, a mousse, whipped cream, non-dairy cream, mayonnaise, dressing, spread, soup, sauce or beverage. More preferably the food composition is a frozen aerated confection.

Preferably the polysaccharide is a galactomannan and the enzyme is mannase.

<u>Definitions</u>

### *Hydrophobins*

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

$$X_n\text{-}C\text{-}X_{5\text{-}9}\text{-}C\text{-}C\text{-}X_{11\text{-}39}\text{-}C\text{-}X_{8\text{-}23}\text{-}C\text{-}X_{5\text{-}9}\text{-}C\text{-}C\text{-}X_{6\text{-}18}\text{-}C\text{-}X_m \text{ (SEQ ID No. 1)}$$

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

$$X_n\text{-}C\text{-}X_{1\text{-}50}\text{-}C\text{-}X_{0\text{-}5}\text{-}C\text{-}X_{1\text{-}100}\text{-}C\text{-}X_{1\text{-}100}\text{-}C\text{-}X_{1\text{-}50}\text{-}C\text{-}X_{0\text{-}5}\text{-}C\text{-}X_{1\text{-}50}\text{-}C\text{-}X_m \text{ (SEQ ID No. 2)}$$

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are generally relatively insoluble whereas those of class II hydrophobins readily dissolve in a variety of solvents. Preferably the hydrophobin is a class II hydrophobin. Preferably the hydrophobin is soluble in water, by which is meant that it is at least 0.1% soluble in water, preferably at least 0.5%. By at least 0.1% soluble is meant that no hydrophobin precipitates when 0.1g of hydrophobin in 99.9 mL of water is subjected to 30,000 g centrifugation for 30 minutes at 20°C.

Hydrophobin-like proteins (e.g."chaplins") have also been identified in filamentous bacteria, such as *Actinomycete* and *Streptomyces* sp. (WO01/74864; Talbot, 2003, Curr. Biol, 13: R696-R698). These bacterial proteins by contrast to fungal hydrophobins, may form only up to one disulphide bridge since they may have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as *Cryphonectria parasitica* which secretes a hydrophobin termed cryparin (MacCabe and Van Alfen, 1999, App. Environ. Microbiol 65:

5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in *Agaricus bisporus;* and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

The hydrophobin is added in a form and in an amount such that it is available to stabilise the gas phase, i.e. the hydrophobin is deliberately introduced into the product for the purpose of taking advantage of its foam stabilising properties. Consequently, where ingredients are present or added that contain fungal contaminants, which may contain hydrophobin polypeptides, this does not constitute adding hydrophobin within the context of the present invention.

Typically, the hydrophobin is added to the product of the invention in an isolated form, typically at least partially purified, such as at least 10% pure, based on weight of solids. By "isolated form", we mean that the hydrophobin is not added as part of a naturally-occurring organism, such as a mushroom, which naturally expresses hydrophobins. Instead, the hydrophobin will typically either have been extracted from a naturally-occurring source or obtained by recombinant expression in a host organism.

### Hydrophobin production

Hydrophobin can be produced from *T. res* then followed by heat treatment and or ultrafiltration to reduce the level of polypeptide.

Alternatively, or in combination with heat treatment and/or ultrafiltration, hydrophobin can be produced from *T. res* by reducing or preventing the production of a thermostable EGV polypeptide.

In a first method, a hydrophobin may be produced from a *Trichoderma* host cell by: introducing a gene encoding the hydrophobin into a *Trichoderma* host cell having a disrupted *egl5* gene and one or more endogenous genes encoding additional functional proteins; incubating the host cell in a medium suitable for producing the hydrophobin and additional functional proteins; and subjecting the hydrophobin and additional functional proteins to an elevated temperature sufficient to substantially inactivate the additional proteins; wherein the elevated temperature is insufficient to inactivate the hydrophobin and would be insufficient to inactivate EGV cellulase produced by a functional *egl5* gene; wherein the hydrophobin is produced in active or functional form substantially in the absence of activity from the the additional proteins.

In a second method, a hydrophobin may be produced from a *Trichoderma* host cell by comprising: producing the hydrophobin and one or more additional functional proteins in *Trichoderma* host cells comprising a gene encoding the hydrophobin, a disrupted *egl5* gene, and a gene or genes encoding the one or more additional functional proteins; subjecting a protein mixture obtained from the host cells to an elevated temperature that is sufficient to substantially inactivate the one or more additional functional proteins but insufficient to inactive the hydrophobinand EGV cellulase produced by a functional *egl5* gene; wherein the hydrophobinis produced in active or functional form substantially in the absence of activity from the additional functional proteins.

In a third method, , a hydrophobin may be produced from a *Trichoderma* host cell by: subjecting a protein mixture obtained from the *Trichoderma* host cells comprising a gene encoding the hydrophobin , a disrupted *egl5* gene, and one or more genes encoding additional functional proteins to an elevated temperature to inactivate the one or more additional functional proteins; thereby producing the hydrophobin in active or functional form in the absence of activity from the additional functional proteins.

In the case of any of the above methods, in some embodiments, the *egl5* gene is disrupted in host cells naturally comprising an *egl5* gene. In some embodiments, the *egl5* gene is deleted in host cells naturally comprising an *egl5* gene. In some embodiments, the *egl5* gene is deleted by homologous recombination.

In the case of any of the above methods, in some embodiments, the one or more additional proteins are thermolabile proteins. In some embodiments, the one or more additional proteins are selected from the group consisting a cellulase, a hemi-cellulase, and a protease In some embodiments, the one or more additional proteins are selected from the group consisting of an exo-cellobiohydrolase, an endoglucanase, and a β-glucosidase.

In the case of any of the above methods, in some embodiments, the elevated temperature is a temperature of 90°C or more. In some embodiments, exposure to the elevated temperature is for a time of 5 minutes or more. In some embodiments, exposure to the elevated temperature is for a time of 60 minutes or more.

*"Trichoderma reesei"* refers to a filamentous fungus of the phylum Ascomycota. This organism was previously classified as *Trichoderma longibrachiatum,* and also as *Hypocrea jecorina*.

*"T. reesei* **EGV cellulase"** refers to a polypeptide having the amino acid sequence of SEQ ID NO: 33 or a related polypeptide. A related polypeptide has at least about 70%, at least about 75%, at least about 80%, at least about 85%, at least about 90%, at least about 91%, at least about 92%, at least about 93%, at least about 94%, at least about 95%, at least about 96%, at least about 97%, at least about 98%, or even at least about 99%, or more, amino acid sequence identity with SEQ ID NO: 33, has endoglucanase

activity on a cellulose substrate, and is thermostable using the assays described, herein. "EGV" may be referred to, herein, as "EG5."

*"T. reesei egl5* **gene"** refers to a nucleic acid that encodes EGV cellulase, or a related polypeptide, as described, above. The nucleotide sequence of an exemplary *egl5* gene is shown as SEQ ID NO: 32.

*"thermostable,"* with respect to a polypeptide, refers to the ability of a polypeptide to retain biological activity after being subjected to a preselected elevated temperature for a preselected period of time. The biological activity may be an enymatic activity, a binding activity, a surface active property, or any other activity or property characteristic of the polypeptide. A polypeptide is considered thermostable if is maintains at least one-half of its original activity following exposure to the preselected elevated temperature for the preselected period of time. In broad terms, the preselected temperature and time are those required to substantially inactivate *T. reesei* cellulases other than EGV. These conditions can readily be established by assaying for cellulase activity in a *T. reesei* host cell deleted for the *egl5* gene.

In some case, a protein is considered to be thermostable if it retains at least one-half (*i.e.,* at least 50%) of its biological activity following exposure to a temperature of at least about 70°C, at least about 75°C, at least about 80°C, at least about 85°C, at least about 90°C, or even at least about 95°C, for a time of at least about 3 minutes, at least about 5 minutes, at least about 10 minutes, at least about 15 minutes, at least about 20 minutes, at least about 30 minutes, at least about 45 minutes, or even at least about 60 minutes. In one example, the preselected temperature is about 90°C or greater and the preselected time is about 5 minutes or greater. In another example, the preselected temperature is about 90°C or greater and the preselected time is about 60 minutes or greater. Thermostable polypeptides include polypeptides that are reversibly denatured at an elevated temperatures, such that at least one-half (i.e., at least 50%) of their biological activity is restored following exposure as described.

*"substantially free of an activity"* (or similar phrases) means that a specified activity is either undetectable in a food composition comprising hydrophobin, or present in an amount that would not interfere with the properties of hydrophobin

*"deletion of a gene,"* refers to its removal from the genome of a host cell.

*"disruption of a gene"* refers broadly to any genetic or chemical manipulation that substantially prevents expression of a function gene product, e.g., a protein, in a host cell. Exemplary methods of disruption include complete or partial deletion of any portion of a gene (including a polypeptide-coding sequence, a promoter, an enhancer, or another regulatory element, or mutagenesis of the same (including substitutions, insertions, deletions, and combinations, thereof), to substantially prevent expression of a function gene product.

*"a functional gene"* is a gene capable of being used by cellular components to produce an active gene product, typically a protein. "Functional" genes are the antithesis of "disrupted" genes, which are modified such that they cannot be used by cellular components to produce an active gene product. Exemplary functional genes include but are not limited to cellulases other than EGV, hemi-cellulases, proteases, amylases, lipases, perhydrolases, esterases, pectate lyases, pectinases, laccases, oxidases, reductases, amidases, and other enzymes, structural proteins, surface active proteins, binding proteins, and the like.

*T. reesei host cells* have been "modified to prevent the production of a thermostable EGV cellulase" if they have been genetically or chemically altered to prevent the production of an EGV polypeptide that exibits thermostable cellulase activity, *e.g.,* as determined using the assays described, herein. Such modifications include, but are not limited to, deletion of the *egl5* gene, disruption of the *egl5* gene, modification of the *egl5* gene such that the encoded EGV polypeptide is no longer thermostable, modification to the *egl5* gene such that the encoded EGV polypeptide no longer exibits cellulase activity, modification of the *egl5* gene such that the encoded EGV polypeptide is no longer secreted, and combinations, thereof.

### *Denaturing Enzymes*

The term "denaturing enzyme" as used herein means an enzyme which breaks down a protein or polysaccharide. Food compositions according to the invention contain one or more proteins and / or polysaccharides and at least one corresponding denaturing enzyme. By "corresponding" is meant that the food composition contains an enzyme which breaks down a protein and or polysaccharide which is also present in the food composition. Thus for example protease is a corresponding denaturing enzyme for protein (e.g. milk protein), cellulose for cellulosic materials (e.g. carboxymethyl cellulose, micro crystalline cellulose), mannanase for polysaccharides based on mannose (e.g. locust bean gum and guar gum), amylase for starches and starch derivatives such as maltodextrins, xylanase for xylans

Cellulose and hemicellulose are the most abundant plant materials produced by photosynthesis. They can be degraded and used as an energy source by numerous microorganisms (*e.g.,* bacteria, yeast and fungi) that produce extracellular enzymes capable of hydrolysis of the polymeric substrates to monomeric sugars (Aro et al. (2001) J. Biol. Chem. 276:24309-14).

Cellulases are enzymes that hydrolyze cellulose ($\beta$-1,4-glucan or $\beta$-D-glucosidic linkages) resulting in the formation of glucose, cellobiose, cellooligosaccharides, and the like. Cellulases have been traditionally divided into three major classes: endoglucanases (EC 3.2.1.4) ("EG"), exoglucanases or cellobiohydrolases (EC 3.2.1.91; "CBH") and $\beta$-glucosidases ($\beta$-D-glucoside glucohydrolase; EC 3.2.1.21; "BG") (Knowles et al. (1987) TIBTECH 5:255-61; and Schulein (1988) Methods Enzymol. 160:234-43). Endoglucanases act mainly on the amorphous parts of the cellulose fibre to hydrolyze internal $\beta$-1,4-glucosidic bonds in regions of low crystallinity. Cellobiohydrolases hydrolyze cellobiose from the reducing or non-reducing end of cellulose and are able to degrade crystalline cellulose (Nevalainen and Penttila (1995) Mycota 303-319). The presence of a cellobiohydrolase (CBH) in a cellulase system is believed to be required for efficient solubilization of crystalline cellulose (Suumakki et al. (2000) Cellulose 7:189-209). $\beta$-glucosidase acts to liberate D-glucose units from cellobiose, cello-oligosaccharides, and other glucosides (Freer (1993) J. Biol. Chem. 268:9337-42). $\beta$-glucosidases have also been shown to catalyze the hydrolysis of alkyl and/or aryl beta-D-glucosides such as methyl $\beta$-D-glucoside and *p*-nitrophenyl glucoside as well as glycosides containing only carbohydrate residues, such as cellobiose.

Cellulases are known to be produced by a large number of bacteria, yeast and fungi. Certain fungi produce complete cellulase systems that include exo-cellobiohydrolases or CBH-type cellulases, endoglucanases or EG-type cellulases and $\beta$-glucosidases or BG-type cellulases. Other fungi and bacteria express little or no CBH-type cellulases. *Trichoderma reesei* (also referred to as *Hypocrea jecorina*) expresses a large number of cellulases, including two CBHs, *i.e.,* CBHI (Cel7a) and CBHII (Cel6a), at least eight EGs, *i.e.,* EGI (Cel7b), EGII (Cel5a), EGIII (Cel12a), EGIV (Cel61a), EGV (Cel45a), EGVI (Cel74a), EGVII (Cel61b), and EGVIII (Cel5b), and at least five BGs, *i.e.,* BG1 (Cel3a), BG2 (Cel1a), BG3 (Cel3b), BG4 (Cel3c) and BG5 (Cel1b). EGIV, EGVI, and EGVIII also have xyloglucanase activity.

As used herein, a "cellulase" is an enzyme that hydrolyzes $\beta$-1,4-glucan or $\beta$-D-glucosidic linkages, resulting in, e.g., the formation of glucose, cellobiose, cellooligosaccharides, and the like from cellulose. Cellulases include, e.g., endoglucanases, exoglucanases, $\beta$-glucosidases, and the like.

### *Mannanase*

Mannanase are enzymes that break down compounds known as mannanes, including polysaccharide galactomannans (e.g. locust bean gum (LBG), guar gum, tara gum, and fenugreek gum) and glucomannan.

### *Protease*

Protease enzymes (also termed peptidase or proteinase) are a class of enzymes that breaks down proteins. Of particular relevance are protease enzymes that break down milk proteins, soy proteins, and gelatine.

"Endoglucanase (EG)" is a cellulase that acts mainly on the amorphous parts of the cellulose fibre to hydrolyze internal $\beta$-1,4-glucosidic bonds in regions of low crystallinity.

*"hemicellulase" and "xylanase"* are used interchangeably to refer generally to enzymes capable of hydrolyzing glycosidic bonds in polysaccharides comprising 5-carbon sugars. Such enzymes include, e.g., mannanases, arabinanases, glucuronidases, acetylxylan esterases, arabinofuranosidases, xylosidases, and the like.

**MMU = Mannanase Mannose Unit**

1 MMU is the amount of mannanase, per milligramme of hydrophobin, that produces (under conditions of pH 7.0, 0.24% Locust Bean Gum (LBG) at 50°C) reducing sugars corresponding to 1 $\mu$mol D-Mannose per minute.

*EGU (Endoglucanase Unit)* is the amount of endogluconase, per milligramme of hydrophobin , that produces 1 $\mu$mol of reducing sugars per minute. This is measured relative to a Novazyme Cellulase standard in this instance.

*Protease unit* (PU) corresponds to the amount cysteine protease, per mg of hydrophobin, which hydrolyses 1 $\mu$mol N-benzoyl-L-arginine ethyl ester (BAEE) per minute at pH 6.2 and 25 °C. This is measured relative to a papain (Sigma) standard in this instance.

**Detailed description of the invention**

The food compositions of the invention can be products which are normally stored and / or served at room temperature (ambient products), chill temperature (e.g. about 4°C) or frozen (below 0°C, typically at about -18°C).

In one particularly preferred embodiment the food composition is a frozen aerated confection such as ice cream or frozen yoghurt. In another embodiment, the composition is a mousse, whipped cream or non-dairy cream. Other preferred food compositions include mayonnaises, dressings, spreads, soups, sauces and beverages, confectionery products and bakery products.

Typically, the food composition contains at least 0.001 wt%, hydrophobin (based on the total weight of the product), preferably at least 0.005 wt%, more preferably at least 0.01, such as about 0.05 wt%. Typically the product will contain less than 1 wt% hydrophobin, more preferably less than 0.1 wt. The hydrophobin can be from a single source or a plurality of sources e.g. a mixture of two or more different hydrophobins.

The food compositions contain proteins and / or polysaccharides. Preferred proteins include dairy proteins and soy protein. Preferred polysaccharides, include galactomannans (such as locust bean gum, guar gum, tara gum, fenugreek gum), glucomannans, mannans, cellulose (carboxymethyl cellulose, microcrystalline cellulose, citrus fibres)

The food compositions of the invention preferably comprise water. The water content can vary (depending on the level of the other ingredients), and is typically 5 - 99.5 wt%, based on the total weight of the product, preferably 20 - 95 wt%.

The food compositions of the invention may comprise oil/fat. Suitable oils/fats include coconut oil, corn oil, cottonseed oil, canola oil (rapeseed oil), olive oil, palm oil, peanut oil (ground nut oil), safflower oil, sesame oil, soybean oil, sunflower oil, butterfat and fish oils (for example cod liver oil). Furthermore, the food compositions may comprise other ingredients which are required and/or desired to the product. Commonly used ingredients for food products are emulsifiers, flavourings, colouring agents, preservatives; sugars e.g. sucrose, fructose, dextrose, lactose, corn syrups, sugar alcohols; fruit or vegetable purees, extracts, pieces or juice;

The food composition may be unaerated or aerated, i.e. gas has been intentionally incorporated in to the composition. The gas can be any gas, but is preferably, particularly in the context of food products, a food-grade gas such as air, nitrogen, nitrous oxide, or carbon dioxide. The extent of aeration is defined in terms of "overrun", which is defined in volume terms as % overrun =

$$[(\text{volume of aerated product} - \text{starting volume of mix}) / \text{starting volume of mix}] \times 100$$

where the volumes of aerated product and unaerated mix are the volumes of a fixed mass of product or starting mix, respectively.

The overrun of an aerated product may vary depending on the desired product characteristics. Preferably the overrun is at least 10%, more preferably at least 25 or 50%. Preferably the amount of overrun is less than 400%, more preferably less than 300 or 200%. For frozen aerated confections, the overrun is most preferably from 70 to 150%. For whipped cream or non-dairy cream and related products, the overrun is most preferably from 100 to 160%.

The aerated products of the invention are stable due to the presence of the hydrophobin, which means that they keep their form and properties over time. Foam stability is defined in terms of the percentage of the initial overrun that remains at a given time after aeration.

The present invention will now be described further with reference to the following nonlimiting examples and by reference to the sole figure.

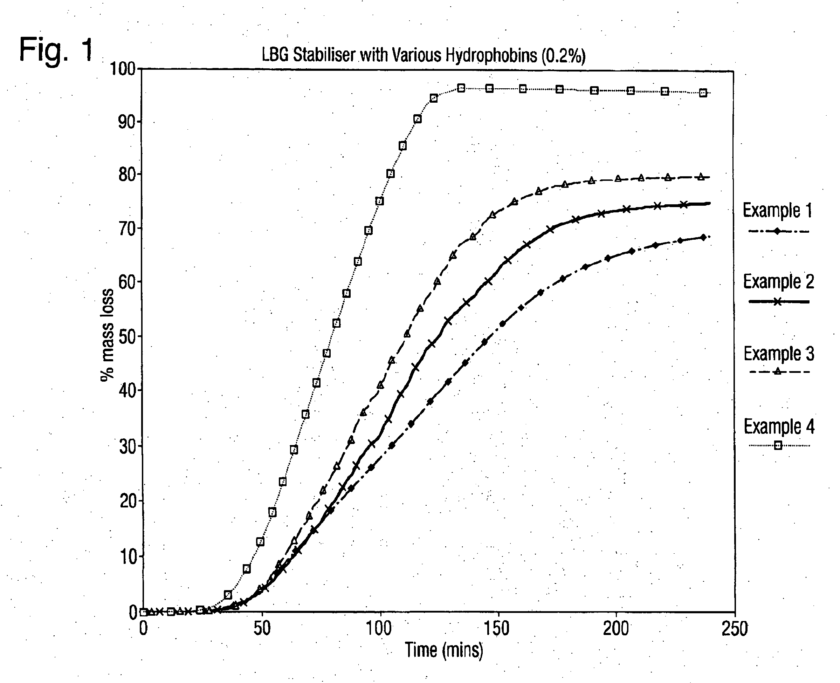

Figure 1 is a plot of the meltdown results for the ice creams of example 1.

Example 1

Ice creams were produced using the formulation shown in Table 1. Water at 80°C was added into a tank equipped with a turbo mixer. The dry sugars were mixed with the stabilisers and added to the tank followed by the skimmed milk powder, liquid sugars, oil and flavours. The mix was blended for about 10 minutes at 60-70°C. The mix was then homogenised at 150 bar and pasteurised at 82°C for 25 seconds in a plate heat exchanger. The mix was then cooled to 4°C in the plate heat exchanger and aged overnight in an ageing tank at 4°C, with gentle stirring.

For Formulations 2 -4, comprising hydrophobin, this protein was post-added to the mix 5 minutes prior to transferring to a hopper and processing through the ice cream freezer.

The mixes were aerated (target overrun 100%) and frozen in a scraped surface heat exchanger (Crepaco WO4 scraped surface heat exchanger) fitted with a series 15 open dasher. Partially frozen ice cream was drawn from the freezer into 500 mL cardboard boxes.

Table 1: Formulations

|  | 1 - Control | 2 - | 3 - | 4 - |
|---|---|---|---|---|
|  | Amount of ingredient in mix / wt % | | | |
| Skim Milk Protein | 8.22 | 8.22 | 8.22 | 8.22 |
| Sucrose | 11.5 | 11.5 | 11.5 | 11.5 |
| LF9 Corn syrup | 10 | 10 | 10 | 10 |
| Locust Bean Gum (LBG) | 0.3 | 0.3 | 0.3 | 0.3 |
| Hydrophobin (HFBII) | 0 | 0.2 | 0.2 | 0.2 |
| Water | To 100 | To 100 | To 100 | To 100 |

Three different hydrophobin preparations were used, and a control sample with no hydrophobin preparation was also produced.

The mannanase activity of each hydrophobin preparation was determined by the measuring the hydrolysis of 1,4-$\beta$-D-mannosidic linkages in locust bean gum at pH 7.0 and 50°C. It is expressed in MMU. The enzyme activities were as follows:

| Example | 1 <br> no hydrophobin | 2 | 3 | 4 |
|---|---|---|---|---|
| Mannanase activity (MMU) | 0.0 | 0.0 | 0.0014 | 0.13 |

The mannanse activity of the hydrophobin used in EP 1626361 was also measured. This was obtained from VTT Biotechnology, Finland. It had been purified from *Trichoderma reesei* essentially as described in WO00/58342 and Linder et al., 2001, Biomacromolecules 2: 511-517. It was found to be at least 0.019 MMU

The rate at which the ice creams melted in a constant temperature environment was measured as follows. Stainless steel wire mesh grids having a size of 25 x 25 cm, with 3mm holes, 1mm thick wire were placed on a 60° funnel with a bore size of 2cm suspended over a collecting vessel (of large enough volume to collect the entire sample tested). The collecting vessel was placed on a balance for weighing the material collected in the vessel. The balances were connected to a data logging system to record the mass collected. The apparatus consisting of grid, funnel, vessel and balance, was contained in a cabinet set at a constant temperature of 20 °C. The cabinet was capable of holding up to 12 of these sets of apparatus simultaneously.

Ice cream samples in the form of rectangular blocks measuring 14.5 x 9 x 3.8cm were equilibrated in a freezer at -25 °C, and then weighed on a zeroed balance with the grid (one of the largest flat faces of the sample is in contact with the grid). The samples were then arranged randomly over the available positions in the meltdown cabinet. Once all samples were in place on the funnels, the data logging system recorded the amount of collected material every minute. From the mass of the sample collected over this period, the percentage mass loss of the samples is calculated using the following formula.

$$\%MassLoss = \frac{M_t - M_0}{F} \times 100$$

wherein:

$M_t$ = mass recorded on the balance (gram) at time t minute
$M_0$ = mass recorded on the balance (gram) at start of analysis, t = 0 minute
F = Initial mass of product (gram)

Figure 1 shows that the best (slowest) meltdown is obtained for the control sample (example 1). Examples 2 and 3 had slightly faster, but still acceptable rates of meltdown, whereas example 4 had much faster meltdown. The stabiliser (locust bean gum) present in the ice cream formulation has the effect of slowing the rate of meltdown. However, when mannanase is present (from the hydrophobin preparation), it breaks down the mannan backbone of the locust bean gum, thereby reducing the molecular weight and hence diminishing its ability to slow the meltdown. These data show that acceptable meltdown can be obtained provided that the activity of the denaturing enzyme is substantially reduced.

**Claims**

1.   A hydrophobin composition having an enzymatic activity selected from the group consisting of :

   . a detectable mannanase activity of less than 0.015 MMU, preferably less than 0.01 MMU,
   . a detectable endogluconase activity of less than 0.1 EGU, preferably less than 0.05 EGU ,
   a detectable cysteine protease activity of less than 1.3 PU, preferably less than 1, more preferably less than 0.5 PU,

   or any combination thereof.

2.   A hydrophobin composition according to claim 1 wherein the mannanase activity is at least 0.001 MMU, more preferably at least 0,005MMU.

3.   A hydrophobin composition according to claim 1 wherein the endogluconase activity is at least 0.001 EGU, more preferably at least 0.005 EGU, most preferably at least 0.01 EGU.

4.   A hydrophobin composition according to claim 1 wherein the cysteine protease activity is at least 0.01 PU, more preferably at least 0.05 PU, more preferably at least 0.1 PU.

5.   A food composition comprising at least 0.001 wt%, hydrophobin (based on the total weight of the product), preferably at least 0.005 wt%, more preferably at least 0.01 wt% said hydrophobin having an enzymatic activity selected from the group consisting of

   . a mannanase activity of less than 0.015 MMU, preferably less than 0.01 MMU,
   . a endogluconase activity of less than 0.1 EGU, preferably less than 0.05 EGU,
   . a cysteine protease activity of less than 1.3 PU, preferably less than 1, more preferably less than 0.5 PU,
   or any combination thereof.

6.   A food composition according to claim 5 wherein the mannanase activity is at least 0.001 MMU, more preferably at least 0,005MMU

7.   A food composition according to claim 5 wherein the endogluconase activity is at least 0.001 EGU, more preferably at least 0.005 EGU, most preferably at least 0.01 EGU.

8.   A food composition according to claim 5 wherein, the cysteine protease activity is at least 0.01 PU, more preferably at least 0.05 PU, more preferably at least 0.1 PU.

9.   A food composition according to any of claims 5 to 8 wherein the food composition contains a protein and / or polysaccharide selected from milk protein, soy protein, cellulose, cellulose derivatives, microcrystalline cellulose, carboxymethyl cellulose, citrus fibre, starch, starch derivatives, locust bean gum, guar gum, fenugreek gum and tara gum.

10. A food composition according to any of claims 5 to 9 wherein the food composition is a frozen aerated confection, a mousse, whipped cream, non-dairy cream, mayonnaise, dressing, spread, soup, sauce or beverage, more preferably the food composition is a frozen aerated confection.

**Patentansprüche**

1. Hydrophobinzusammensetzung mit einer Enzymaktivität, die aus der Gruppe ausgewählt ist, bestehend aus:
   ♠ einer nachweisbaren Mannanaseaktivität von weniger als 0,015 MMU, vorzugsweise von weniger als 0,01 MMU,
   ♠ einer nachweisbaren Endogluconaseaktivität von weniger als 0,1 EGU, vorzugsweise von weniger als 0,05 EGU,
   ♠ einer nachweisbaren Cysteinproteaseaktivität von weniger als 1,3 PU, vorzugsweise von weniger als 1, stärker bevorzugt von weniger als 0,5 PU,
   oder irgendeiner Kombination davon.

2. Hydrophobinzusammensetzung nach Anspruch 1,
   wobei die Mannanaseaktivität mindestens 0,001 MMU, stärker bevorzugt mindestens 0,005 MMU beträgt.

3. Hydrophobinzusammensetzung nach Anspruch 1,
   wobei die Endogluconaseaktivität mindestens 0,001 EGU, stärker bevorzugt mindestens 0,005 EGU, besonders bevorzugt mindestens 0,01 EGU beträgt.

4. Hydrophobinzusammensetzung nach Anspruch 1,
   wobei die Cysteinproteaseaktivität mindestens 0,01 PU, stärker bevorzugt mindestens 0,05 PU, stärker bevorzugt mindestens 0,1 PU beträgt.

5. Nahrungsmittelzusammensetzung, die mindestens 0,001 Gew.-%, vorzugsweise mindestens 0,005 Gew.-%, stärker bevorzugt mindestens 0,01 Gew.-% Hydrophobin aufweist (auf das Gesamtgewicht des Produktes bezogen), wobei das Hydrophobin eine Enzymaktivität aufweist, die aus der Gruppe ausgewählt ist, bestehend aus:
   ♠ einer Mannanaseaktivität von weniger als 0,015 MMU, vorzugsweise von weniger als 0,01 MMU,
   ♠ einer Endogluconaseaktivität von weniger als 0,1 EGU, vorzugsweise von weniger als 0,05 EGU,
   ♠ einer Cysteinproteaseaktivität von weniger als 1,3 PU, vorzugsweise von weniger als 1, stärker bevorzugt von weniger als 0,5 PU,
   oder irgendeiner Kombination davon.

6. Nahrungsmittelzusammensetzung nach Anspruch 5,
   wobei die Mannanaseaktivität mindestens 0,001 MMU, stärker bevorzugt mindestens 0,005 MMU beträgt.

7. Nahrungsmittelzusammensetzung nach Anspruch 5,
   wobei die Endogluconaseaktivität mindestens 0,001 EGU, stärker bevorzugt mindestens 0,005 EGU, besonders bevorzugt mindestens 0,01 EGU beträgt.

8. Nahrungsmittelzusammensetzung nach Anspruch 5,
   wobei die Cysteinproteaseaktivität mindestens 0,01 PU, stärker bevorzugt mindestens 0,05 PU, stärker bevorzugt mindestens 0,1 PU beträgt.

9. Nahrungsmittelzusammensetzung nach einem der Ansprüche 5 bis 8,
   wobei die Nahrungsmittelzusammensetzung ein Protein und/oder Polysaccharid enthält, das aus Milchprotein, Sojaprotein, Cellulose, Cellulosederivaten, mikrokristalliner Cellulose, Carboxymethylcellulose, Citrusfasern, Stärke, Stärkederivaten, Johannisbrotkernmehl, Guargummi, Bockshornklee und Tara-Gummi ausgewählt ist.

10. Nahrungsmittelzusammensetzung nach einem der Ansprüche 5 bis 9,
    wobei die Nahrungsmittelzusammensetzung ein gefrorenes, mit Luft durchsetztes Konfekt, eine Cremespeise, Schlagsahne, milchfreie Creme, Mayonnaise, Dressing, Brotaufstrich, Suppe, Soße oder ein Getränk ist, wobei die Nahrungsmittelzusammensetzung stärker bevorzugt ein gefrorenes, mit Luft durchsetztes Konfekt ist.

## Revendications

1. Composition d'hydrophobine présentant une activité enzymatique choisie dans le groupe constitué de :

   - une activité de mannanase détectable inférieure à 0,015 MMU, de préférence inférieure à 0,01 MMU,
   - une activité d'endogluconase détectable inférieure à 0,1 EGU, de préférence inférieure à 0,05 EGU.
   - une activité de cystéine protéase détectable inférieure à 1,3 PU, de préférence inférieure à 1, encore mieux inférieure à 0,5 PU,

   ou une combinaison quelconque de celles-ci.

2. Composition d'hydrophobine selon la revendication 1, dans laquelle l'activité de mannanase est d'au moins 0,001 MMU, encore mieux d'au moins 0,005 MMU.

3. Composition d'hydrophobine selon la revendication 1, dans laquelle l'activité d'endogluconase est d'au moins 0,001 EGU, encore mieux d'au moins 0,005 EGU, bien mieux encore d'au moins 0,01 EGU.

4. Composition d'hydrophobine selon la revendication 1, dans laquelle l'activité de cystéine protéase est d'au moins 0,01 PU, encore mieux d'au moins 0,05 PU, bien mieux encore d'au moins 0,1 PU.

5. Composition alimentaire comprenant au moins 0,001 % en poids d'hydrophobine (rapporté à la masse totale du produit), de préférence au moins 0,005 % en poids, encore mieux au moins 0,01 % en poids, ladite hydrophobine présentant une activité enzymatique choisie dans le groupe constitué de

   . une activité de mannanase inférieure à 0,015 MMU, de préférence inférieure à 0,01 MMU,
   . une activité d'endogluconase inférieure à 0,1 EGU, de préférence inférieure à 0,05 EGU.
   - une activité de cystéine protéase inférieure à 1,3 PU, de préférence inférieure à 1, encore mieux inférieure à 0,5 PU,

   ou une combinaison quelconque de celles-ci.

6. Composition alimentaire selon la revendication 5, dans laquelle l'activité de mannanase est d'au moins 0,001 MMU, encore mieux d'au moins 0,005 MMU.

7. Composition alimentaire selon la revendication 5, dans laquelle l'activité d'endogluconase est d'au moins 0,001 EGU, encore mieux d'au moins 0,005 EGU, bien mieux encore d'au moins 0,01 EGU.

8. Composition alimentaire selon la revendication 5, dans laquelle l'activité de cystéine protéase est d'au moins 0,01 PU, encore mieux d'au moins 0,05 PU, bien mieux encore d'au moins 0,1 PU.

9. Composition alimentaire selon l'une quelconque des revendications 5 à 8, dans laquelle la composition alimentaire contient une protéine et/ou un polysaccharide choisi parmi une protéine de lait, une protéine de soja, la cellulose, des dérivés de cellulose, la cellulose microcristalline, la carboxyméthylcellulose, une fibre d'agrume, l'amidon, des dérivés d'amidon, la gomme de caroube, la gomme de guar, la gomme de fenugrec et la gomme de tara.

10. Composition alimentaire selon l'une quelconque des revendications 5 à 9, dans laquelle la composition alimentaire est une confiserie aérée glacée, une mousse, une crème fouettée, une crème non laitière, une mayonnaise, un nappage, une pâte à tartiner, une soupe, une sauce ou une boisson, la composition alimentaire est encore mieux une confiserie aérée glacée.

Fig. 1

LBG Stabiliser with Various Hydrophobins (0.2%)

Example 1

Example 2

Example 3

Example 4

## REFERENCES CITED IN THE DESCRIPTION

### Patent documents cited in the description

- EP 1626361 A
- WO 0174864 A
- WO 9641882 A
- WO 0157076 A
- WO 0058342 A

### Non-patent literature cited in the description

- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **TALBOT.** *Curr. Biol,* 2003, vol. 13, R696-R698
- **MACCABE ; VAN ALFEN.** *App. Environ. Microbiol,* 1999, vol. 65, 5431-5435
- **WOSTEN.** *Annu Rev. Microbiol,* 2001, vol. 55, 625-646
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85
- **ARO et al.** *J. Biol. Chem.,* 2001, vol. 276, 24309-14
- **KNOWLES et al.** *TIBTECH,* 1987, vol. 5, 255-61
- **SCHULEIN.** *Methods Enzymol.,* 1988, vol. 160, 234-43
- **NEVALAINEN ; PENTTILA.** *Mycota,* 1995, 303-319
- **SUUMAKKI et al.** *Cellulose,* 2000, vol. 7, 189-209
- **FREER.** *J. Biol. Chem.,* 1993, vol. 268, 9337-42
- **LINDER et al.** *Biomacromolecules,* 2001, vol. 2, 511-517